# DEMANDE DE BREVET EUROPEEN

(11) **EP 1 847 346 A1**
(43) Date de publication de la demande: **24.10.2007**
(21) Numéro de dépôt: 06447042.0
(22) Date de dépôt: 28.03.2006
(51) Int. Cl.: B23C 5/04

(54) **Outil de coupe en carbure et procédé de fabrication d'un tel outil**

(71) Demandeur: Precicarb, 4800 Verviers (BE)
(72) Inventeur: Kerf, Gérard, 4837 Baelen (BE)
(74) Mandataire: pronovem

(57) **Abrégé**

La présente invention se rapporte à un outil de coupe rotatif (1) présentant un mandrin de support cylindrique (2) et plusieurs lames individuelles (3) à arêtes tranchantes essentiellement radiales, affûtées hélicoidalement et disposées régulièrement sur la surface extérieure du mandrin, caractérisé en ce que chaque lame (3) comporte une base rectiligne (4) qui vient s'insérer dans une rainure (5) de même forme que ladite base, chaque lame individuelle (3) étant montée fixée mécaniquement au mandrin (2).

## Description

### Objet de l'invention

La présente invention se rapporte à un outil de coupe à couteaux ou lames présentant une résistance renforcée à l'usure, en particulier pour la découpe en granules de toute matière synthétique ou minérale en fil (plastique, fibre de verre, etc.), enrobée ou non, avant son utilisation comme matière première.

L'invention concerne un outil de coupe rotatif présentant plusieurs arêtes tranchantes individuelles disposées régulièrement ou non autour d'un axe.

L'invention se rapporte également à un procédé de fabrication d'un tel outil.

### Etat de la technique et position du problème

Dans la fabrication ou le recyclage de matières plastiques par exemple; on connaît des granulateurs comportant une extrudeuse ou une bobine, qui fonctionnent selon le principe du hachoir. Dans le cas de l'extrudeuse, la matière plastique est chauffée et la masse fondue poussée au travers d'un disque à trous.

Les fils sortant sont alors coupés en granules par des lames rotatives. Les arêtes tranchantes de ces lames sont généralement hélicoïdales pour une meilleure répartition de l'effort et pour éviter les vibrations, les fils étant alors coupés successivement et non simultanément.

L'état de la technique propose de nombreuses applications de couteaux de ce type à affûtage hélicoïdal des lames. Celles-ci peuvent être usinées dans la masse, c'est-à-dire que la pièce est monobloc, en acier rapide fortement allié ou fritté, de dureté Rockwell C au moins supérieure à 60 (par exemple GB-A-2 364 007, FR-A-2 301 327, GB-A-923 087, JP-A-2000/107925). Elles peuvent encore de présenter sous forme de plaquettes réalisées en un matériau de résistance renforcée à l'usure, tel que le carbure de tungstène, l'acier rapide ou la céramique, éventuellement revêtus. Dans ce cas, les plaquettes de coupe sont solidarisées au corps de l'outil de coupe par brasage, sertissage ou clamage, collage non-métallique, etc. (par exemple US-A-5,586,843, GB-A-1 334 676, GB-A-2 116 094).

Commercialement, on trouvé sur le marché des outils de coupe et contre-lames de ce type, de diamètre allant de 50 à 200 mm et de longueur allant de 50 à 600 mm, soit monobloc en acier traité ou alliages spéciaux, soit à plaquettes brasées en carbure.

Dans le cas des granulateurs précités utilisés en production, il est nécessaire de remplacer les outils de coupe monobloc usée jusqu'à plusieurs fois par jour, ce qui multiplie les temps d'arrêt de l'outil de production et grève la productivité (jusqu'à plusieurs heures d'arrêt par jour). L'utilisation de carbure, particulièrement sous forme d'outils monobloc, permet d'augmenter de 5 à 10 fois la durée de vie de l'outil de coupe. Cependant les outils monobloc obtenus par frittage sont coûteux et la détérioration d'une seule lame implique le remplacement de l'outil complet.

De plus, dans le cas des outils de coupe pour granulateurs, les couteaux à arêtes tranchantes hélicoïdales sont disposés axialement sur toute la longueur du corps cylindrique support. Le positionnement et la solidarisation de lames individuelles sur celui-ci sont des opérations extrêmement délicates au vu de la tolérance à respecter pour l'affûtage final, à plus forte raison pour des lames hélicoïdales.

### Buts de l'invention

La présente invention vise à fournir une solution qui permette de s'affranchir des inconvénients de l'état de la technique.

En particulier, l'invention vise à fournir un outil de coupe pour granulateur dont la durée de vie en utilisation est augmentée significativement.

L'invention vise encore à fournir un outil de coupe qui soit meilleur marché que les outils de l'état de la technique en termes de fabrication et de réparation.

L'invention a encore pour but de fournir un procédé simple et économique de fabrication et d'affûtage de l'outil de coupe selon l'invention.

### Principaux éléments caractéristiques de l'invention

Un premier aspect de la présente invention concerne un outil de coupe rotatif présentant un mandrin de support cylindrique et plusieurs lames individuelles à arêtes tranchantes essentiellement radiales, affûtées hélicoïdalement et disposées régulièrement sur la surface extérieure du mandrin, caractérisé en ce que chaque lame comporte une base rectiligne qui vient s'insérer dans une rainure de même forme que ladite base, chaque lame individuelle étant montée fixée mécaniquement au mandrin.

De préférence, la base est essentiellement rectangulaire ou a la forme d'un parallélogramme et la rainure est respectivement de section rectangulaire ou en parallélogramme .

Avantageusement, la fixation mécanique des lames au mandrin est obtenue par vissage, serrage, brasage, frettage, sertissage ou collage.

De préférence encore, les lames sont montées vissées au mandrin au moyen de vis à tête tronconique.

De préférence encore, le mandrin présente des supports de lame munis de rainures transversales espacées régulièrement pour le positionnement des vis.

Avantageusement, les vis sont disposées régulièrement le long des lames, dans les rainures des supports de lame, , de manière à les bloquer au moyen des têtes de vis dans les rainures rectilignes correspondantes.

Toujours selon l'invention les lames s'étendent sur toute la longueur du mandrin avec un profil tranchant monotone et régulier, dépourvu de dents sur toute la longueur des lames.

Selon une forme d'exécution préférée de l'invention, les rainures usinées dans le mandrin sont inclinées d'un angle compris entre 0° et 15°, et de préférence entre 5° et 15°, par rapport à l'axe du mandrin.

Avantageusement, les lames sont en carbure cémenté à base de carbure de tungstène, en acier rapide ou à haute résistance, en diamant, en céramique ou en cermet, éventuellement revêtus de nitrure de titane, nitrure d'aluminium de titane ou carbonitrure de titane, nitrure de chrome mono- ou multicouches.

Toujours avantageusement, le mandrin est en acier inoxydable.

Selon une modalité d'exécution particulièrement avantageuse, chaque lame comporte au moins deux arêtes tranchantes parallèles à affûtage hélicoïdal.

Selon une autre modalité d'exécution particulièrement avantageuse, la fixation des lames est renforcée par la fixation additionnelle de deux couvercles aux bases respectives du mandrin.

De préférence, les lames ont au moins une extrémité tronconique qui coopère, lors de la fixation, avec un cône inversé usiné dans le couvercle correspondant.

De préférence encore, au moins un des deux couvercles est fendu radialement et présente un orifice de vissage entre deux fentes quelconques, de manière telle qu'il y ait au maximum deux arêtes tranchantes entre deux fentes quelconques.

Un second aspect de la présente invention concerne un procédé de fabrication d'un outil de coupe rotatif selon l'une quelconque des revendications précédentes, caractérisé au moins par les étapes successives suivantes:
- on usine des ébauches de lames à base rectiligne;
- on positionne les ébauches de lames à base rectiligne dans les rainures correspondantes usinées dans le mandrin;
- on fixe mécaniquement les ébauches de lames au mandrin, de préférence au moyen de vis à tête tronconique, ainsi que les couvercles ;
- on usine les ébauches de lames pour obtenir des lames finies dont l'affûtage hélicoïdal satisfait à des tolérances globales prédéterminées de l'outil de coupe.

### Brève description des figures

La figure 1 représente une vue éclatée en perspective de l'outil de coupe selon une forme d'exécution préférée de la présente invention.

Les figures 2A et 2B représentent respectivement une vue en élévation et une vue en coupe du mandrin de support de l'outil de coupe selon la figure 1.

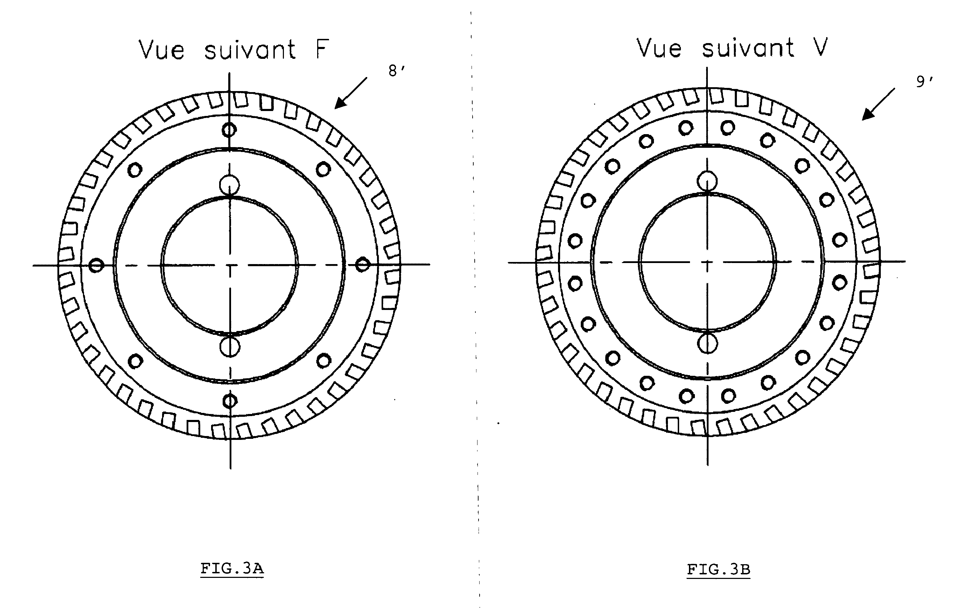

Les figures 3A et 3B représentent des vues respectives des bases du mandrin précité.

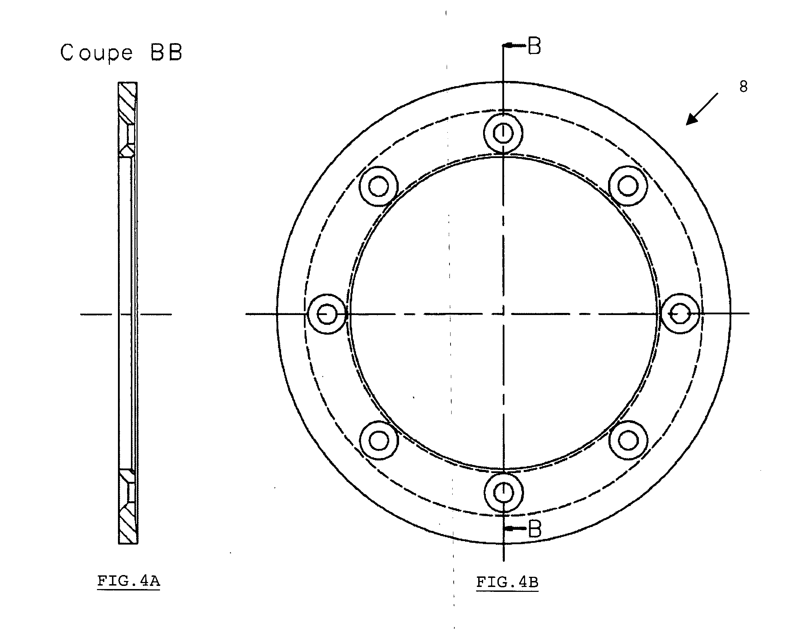

Les figures 4A et 4B représentent respectivement une vue en coupe et une vue en plan du couvercle correspondant à la base de la figure 3A.

Les figures 5A et 5B représentent respectivement une vue en coupe et une vue en plan du couvercle correspondant à la base de la figure 3B.

### Description d'une forme d'exécution préférée de l'invention

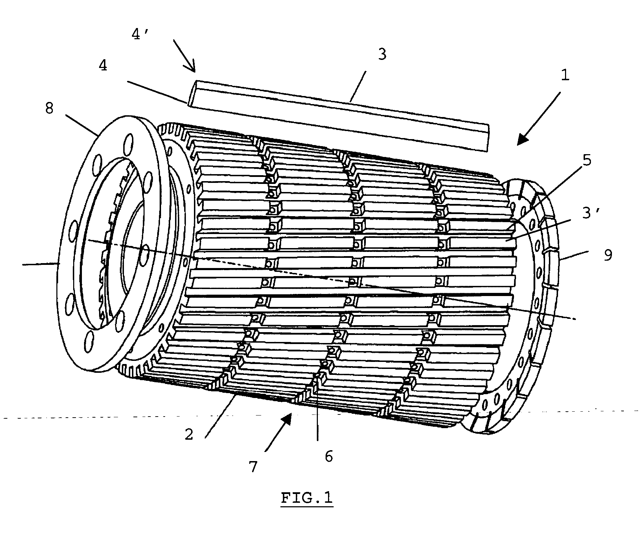

Comme représenté sur la figure 1, l'outil de coupe 1 selon l'invention comprend un mandrin cylindrique 2 porte-lames, réalisé par exemple en acier courant ou acier inoxydable. Les lames 3, par contre, sont réalisées dans une matière présentant une grande résistance à l'usure, comme par exemple le carbure de tungstène (WC), la céramique, l'acier rapide, etc., éventuellement revêtus de nitrure de titane (TiN), carbonitrure de titane (TiCN), nitrure d'aluminium de titane (TiAlN), nitrure de chrome (CrN), etc.

Les lames brutes ou ébauches (non représentées) se présentent essentiellement sous forme de parallélépipèdes rectangles ou de barreaux à base rectiligne affûtés grossièrement et sont fixées sur la surface latérale du mandrin cylindrique 2 dans des rainures 5 par un moyen mécanique, par exemple par blocage au moyen de vis à tête tronconique 6. Les lames 3 sont orientées parallèlement les unes aux autres selon un angle d'environ 10 degrés par rapport à l'axe du cylindre 2. Cette inclinaison permettra aux lames à affûtage de finition hélicoïdal d'avoir un angle d'hélice plus grand que des lames disposées axialement.

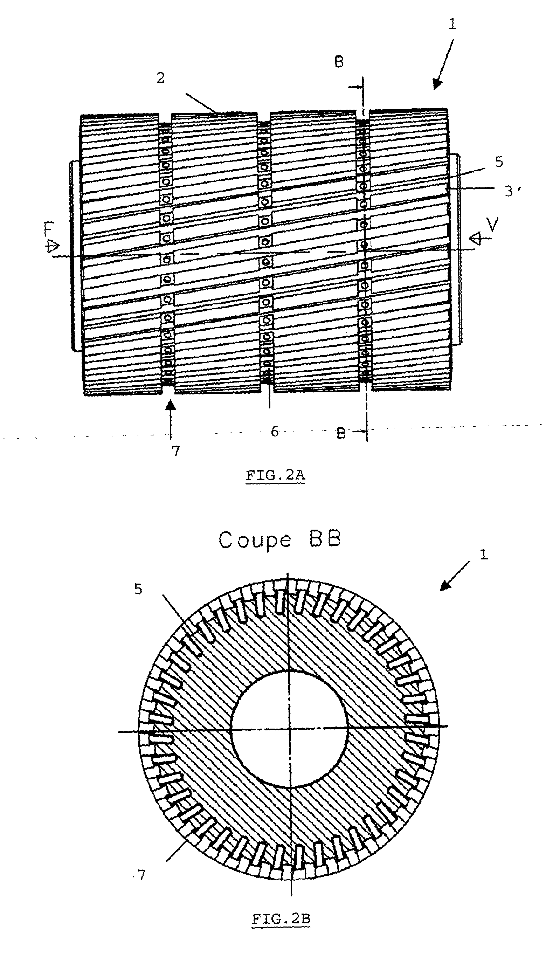

Le mandrin 2 est pourvu d'une pluralité de rainures rectilignes 5, à fond plat, permettant la fixation des ébauches de lames 3, dont la base 4 est de forme correspondante, c'est-à-dire rectangulaire ou en parallélogramme (figures 1, 2A et 2B). Une fois celles-ci fixées au mandrin, on peut alors réaliser facilement l'affûtage de finition des lames selon les tolérances requises.

Entre les rainures, le mandrin 2 présente ainsi des supports de lame 3' présentant eux-mêmes une pluralité de rainures transversales 7, par exemple au nombre de trois, espacées régulièrement et permettant l'introduction des vis coniques 6 précitées.

L' invention n'est pas limitée à une fixation par vis des ébauches de lames, mais tout moyen mécanique tel que sertissage, serrage, frettage à chaud, clamage, brasage, collage, etc., peut être envisagé dans les limites de l'invention.

De manière avantageuse, les ébauches de lames 3 et le mandrin 2 peuvent être dimensionnés de manière telle que, sur la largeur des rainures rectilignes 5 usinées dans le mandrin, on peut insérer une lame comportant deux arêtes tranchantes (non représenté).

Selon une modalité préférée de l'invention, la fixation des lames 3 est renforcée par la fixation additionnelle de deux couvercles 8, 9 à cônes inversés par rapport aux bases 8', 9' du mandrin 2.

Les lames 3 ont dès lors au moins une extrémité tronconique 4' qui coopère, lors de la fixation de l'ensemble, avec un cône inversé usiné dans le couvercle 8 correspondant.

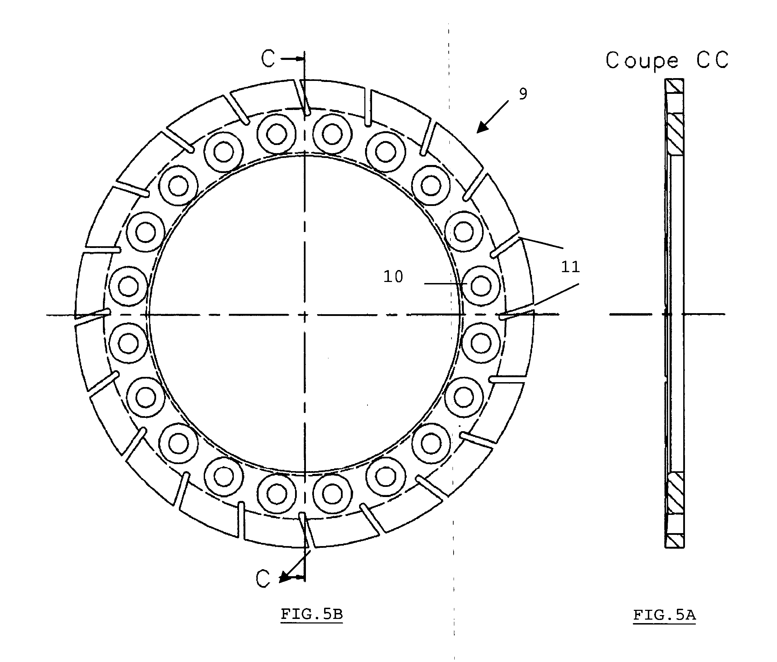

Afin de reprendre toute la longueur des lames, au moins un des deux couvercles (couvercle 9, figures 1 et 5B) est fendu radialement et présente un orifice de vissage 10 entre deux fentes 11 quelconques, de manière telle qu'il y ait au maximum deux lames entre deux fentes, vu ce qui est précisé plus haut. Ces dispositions permettent de s'opposer à la sortie du couteau en rotation, sous l'action de la force centrifuge.

L'invention présente les avantages suivants.

L'utilisation de carbure permet d'augmenter fortement la durée de vie des lames et donc de diminuer les temps d'arrêt en production.

Les lames sont interchangeables et amovibles. Du fait de la solidarisation individuelle de chaque lame au porte-lames, toute lame défectueuse peut être remplacée séparément, ce qui réduit considérablement le coût de réparation par rapport au dispositif monobloc. De plus, chaque outil peut être livré avec deux jeux de lames.

Le coût d'usinage d'un mandrin et de barreaux séparés est moindre que celui d'une pièce monobloc.

## Revendications

1. Outil de coupe rotatif (1) présentant un mandrin de support cylindrique (2) et plusieurs lames individuelles (3) à arêtes tranchantes essentiellement radiales, affûtées hélicoïdalement et disposées régulièrement sur la surface extérieure du mandrin, **caractérisé en ce que** chaque lame (3) comporte une base rectiligne (4) qui vient s'insérer dans une rainure (5) de même forme que ladite base, chaque lame individuelle (3) étant montée fixée mécaniquement au mandrin (2).

2. Outil selon la revendication 1, **caractérisé en ce que** la base (4) est essentiellement rectangulaire ou a la forme d'un parallélogramme et que la rainure (5) est respectivement de section rectangulaire ou en parallélogramme.

3. Outil selon la revendication 1 ou 2, **caractérisé en ce que** la fixation mécanique des lames (3) au mandrin est obtenue par vissage, serrage, brasage, frettage, sertissage ou collage.

4. Outil selon la revendication 1, 2 ou 3, **caractérisé en ce que** les lames sont montées vissées au mandrin (2) au moyen de vis à tête tronconique (6).

5. Outil selon la revendication 4, **caractérisé en ce que** le mandrin (2) présente des supports de lame (3') munis de rainures transversales (7) espacées régulièrement pour le positionnement des vis (6).

6. Outil selon la revendication 4 ou 5, **caractérisé en ce que** les vis (6) sont disposées régulièrement le long des lames (3), dans les rainures (7) des supports de lame (3'), de manière à les bloquer au moyen des têtes de vis dans les rainures rectilignes (5) correspondantes.

7. Outil selon la revendication 1, **caractérisé en ce que** les lames (3) s'étendent sur toute la longueur du mandrin (2) avec un profil tranchant monotone et régulier, dépourvu de dents sur toute la longueur des lames (3).

8. Outil selon la revendication 7, **caractérisé en ce que** les rainures (5) usinées dans le mandrin (2) sont inclinées d'un angle compris entre 0° et 15°, et de préférence entre 5° et 15°, par rapport à l'axe du mandrin.

9. Outil selon l'une quelconque des revendications précédentes, **caractérisé en ce que** les lames (3) sont en carbure cémenté à base de carbure de tungstène, en acier rapide ou à haute résistance, en diamant, en céramique ou en cermet, éventuellement revêtus de nitrure de titane, nitrure d'aluminium de titane ou carbonitrure de titane, nitrure de chrome, mono- ou multicouches.

10. Outil selon l'une quelconque des revendications précédentes, **caractérisé en ce que** le mandrin (2) est en acier inoxydable.

11. Outil selon l'une quelconque des revendications précédentes, **caractérisé en ce que** chaque lame (3) comporte au moins deux arêtes tranchantes parallèles à affûtage hélicoïdal.

12. Outil selon l'une quelconque des revendications précédentes, **caractérisé en ce que** la fixation des lames (3) est renforcée par la fixation additionnelle de deux couvercles (8, 9) aux bases respectives (8', 9') du mandrin.

13. Outil selon la revendication 12, **caractérisé en ce que** les lames (3) ont au moins une extrémité tronconique (4') qui coopère, lors de la fixation, avec un cône inversé usiné dans le couvercle correspondant (8).

14. Outil selon la revendication 12 ou 13, **caractérisé en ce qu'**au moins un des deux couvercles (9) est fendu radialement et présente un orifice de vissage (10) entre deux fentes (11) quelconques, de manière telle qu'il y ait au maximum deux arêtes tranchantes entre deux fentes quelconques (11).

15. Procédé de fabrication d'un outil de coupe rotatif selon l'une quelconque des revendications précédentes, **caractérisé** au moins par les étapes successives suivantes:
- on usine des ébauches de lames à base rectiligne (4) ;
- on positionne les ébauches de lames à base rectiligne (4) dans les rainures (5) correspondantes usinées dans le mandrin (2) ;
- on fixe mécaniquement les ébauches de lames au mandrin (2), de préférence au moyen de vis à tête tronconique (6), ainsi que les couvercles (8, 9) ;
- on usine les ébauches de lames pour obtenir des lames finies (3) dont l'affûtage hélicoïdal satisfait à des tolérances globales prédéterminées de l'outil de coupe.
